# EUROPEAN PATENT APPLICATION

(11) **EP 4 436 250 A2**
(43) Date of publication of application: **25.09.2024**
(21) Application number: 24165252.8
(22) Date of filing: 21.03.2024
(51) Int. Cl.: H04W 28/06, H04W 36/02, H04W 36/00

(54) **SYSTEMS AND METHODS EMPLOYING UPLINK DATA COMPRESSION (UDC) IN A WIRELESS COMMUNICATION SYSTEM**

(30) Priority: 24.03.2023 IN 202341021251; 30.01.2024 IN 202341021251
(71) Applicant: Samsung Electronics Co., Ltd., Suwon-si, Gyeonggi-do 16677 (KR)
(72) Inventor: KUMAR, Rohit, Bengaluru (IN); DEVARAYANIGARI, Pavan Kumar, Bengaluru (IN); MADDUKURI, Sree Ratan Tej, Bengaluru (IN); KIM, Youngtaek, Bengaluru (IN)
(74) Representative: Marks & Clerk LLP

(57) **Abstract**

Disclosed herein are systems and methods employing Uplink Data Compression (UDC) in a wireless communication system. The method includes detecting a handover event or a reestablishment event for a UDC bearer, between a UE and a network. The method further includes performing a first determining operation for determining whether a PDCP status report is received by the UE from the network. Thereafter, the method includes transmitting uncompressed data packets until the PDCP status report is received by the UE. The method further includes performing a second determining operation for determining whether a PDCP timer associated with a reordering window of the PDCP layer is running or stopped. The method further includes transmitting compressed data packets based on a result of the first or second determination operation.

## Description

### Technical Field

This disclosure generally relates to the field of wireless communication and more particularly to systems and methods employing Uplink Data Compression (UDC) in a wireless communication system.

### Discussion of Related Art

Various techniques and features are available in a 3rd Generation Partnership Project (3GPP) communications protocol for improving throughput, latency and capacity, especially for users at the cell edge. One such technique is known as Uplink Data Compression (UDC), which is a data compression technique used in 3GPP based systems. UDC has become an important component in modern cellular communication systems, particularly as the demand for highspeed data transmission continues to grow. The use of UDC has been standardized by the 3GPP and is widely adopted by cellular network operators around the world.

An aim of UDC is to reduce the amount of data transmitted in the uplink direction (from the user equipment (UE) to the base station). UDC is implemented in the protocol stack of the UE and may utilize a combination of data compression algorithms to achieve significant reductions in data size. The compressed data is then transmitted to the base station, where it is decompressed and processed in its original form. In the UDC technique, a user equipment (UE) connected with a long-term evolution (LTE) network entity in a network environment, sends compressed uplink data packets to the network. The mechanism may work as follows: in some cases, a new uplink data packet is the same as a previously transmitted data packet. Thus, a compressed uplink data packet (corresponding to the new packet) may be a smaller sized packet containing pointer metadata that represents a location in some memory of the previously transmitted data packet. To implement this scheme, the same compression buffer may be maintained at the UE and the network entity.

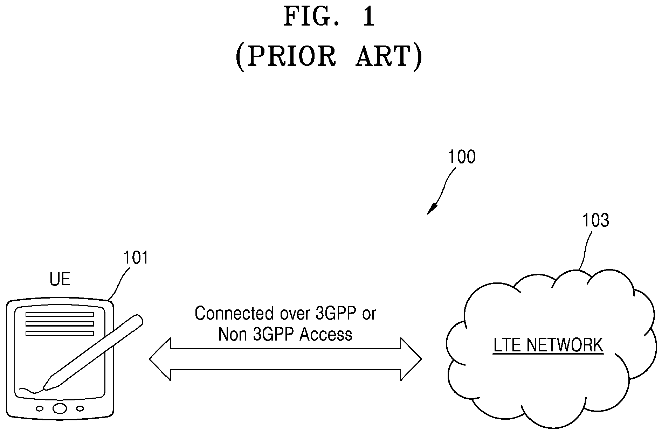

FIG. 1 illustrates an example prior art network environment 100 in which a UE is connected to an LTE network. As illustrated, a UE 101 is connected with the LTE network entity (also referred to as "LTE network", "network entity", "receiver network entity", "receiver network", "network") 103 over a 3GPP or non-3GPP (N3GPP) access type. The LTE network entity 103, which may be referred to as a Node B, eNodeB, gNodeB, etc., is accessed for establishing a connection with the UE 101.

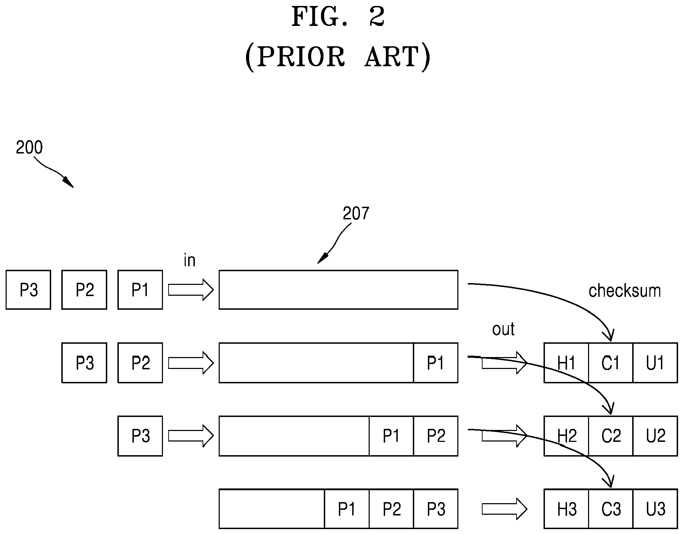

FIG. 2 illustrates a prior art method involving uplink data compression of data packets in a network environment 200 (a 3GPP-based environment). Referring to FIGS. 1 and 2, the UE 101 has data packets P1 , P2, and P3 for the uplink data compression, and maintains a PDCP compression buffer 207. The same compression buffer is maintained at both the UE 101 and the network entity 103. An "FU" bit in a UDC packet header such as H1, H2 or H3 having a value "0" ("FU-0") indicates that the data packet is uncompressed, and an FU bit with value "1" ("FU-1") indicates that the data packet is compressed.

Initially, the data packet P1 and the PDCP compression buffer 207 are compressed by the UE 101. After the compression, a compressed packet data convergence protocol (PDCP) data packet is received as an output U1 from the UE 101. Thereafter, the compressed PDCP data packet is further sent to a receiver of the LTE network entity 103 for decompression. While compressing, the data packet P1 becomes a part of the PDCP compression buffer 207. C1 is a checksum computed using the PDCP compression buffer 207 data before compressing the data packet P1. Likewise, the data packet P2 is inputted for compression, and outputs U2 and C2 are obtained at the UE 101. In a scenario where the data packet P3 is also inputted for compression at any time *t*, until a later time *t'*, the data packets P1 and P2 become a part of the PDCP compression buffer 207. After the compression, the compressed data packets P1, P2, and P3 are transmitted by the UE 101, received by the network entity 103 (and routed to its PDCP layer), and decompressed. For a successful decompression, each of the data packets P1, P2 and P3 need to be received at the LTE network entity 103 sequentially. For example, for the decompression of the compressed data packet P3, the compressed data packets P1 and P2 must have already been received at the LTE network entity 103. This complete procedure is a Radio Link Layer (RLC) acknowledged mode (AM) based process. Therefore, for each decompression at the LTE network entity 103, every data packet has to be received in a sequenced manner. If any of the data packets (P1 or P2) are missed, the decompression of the data packet P3 will not be possible.

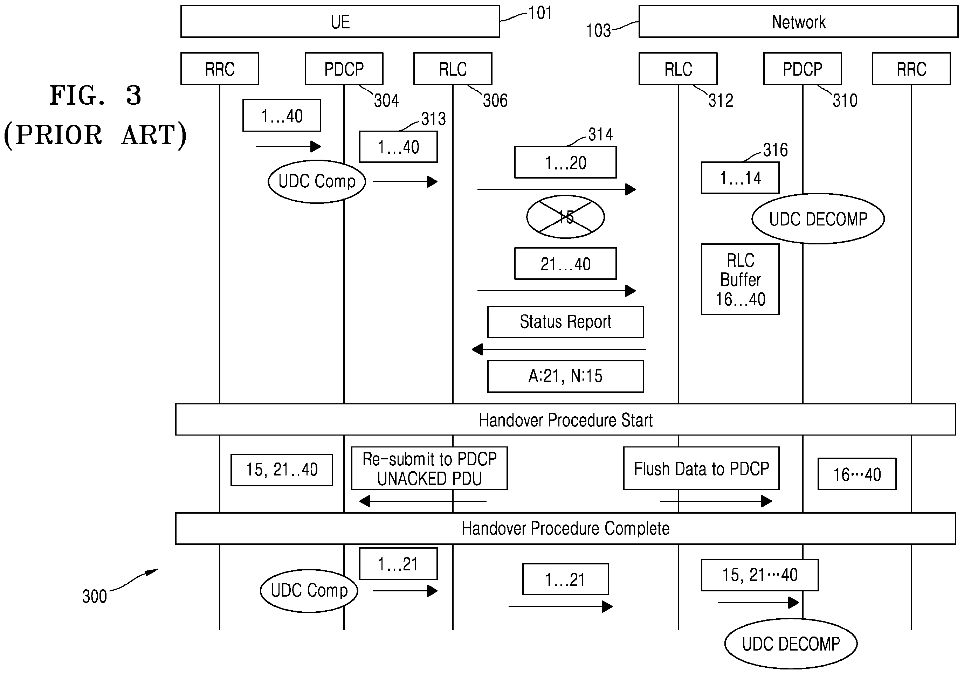

FIG. 3 illustrates another example prior art network environment 300 in which the UE is connected to the LTE network. The network environment 300 is a network environment depicting the initiation and completion of a handover procedure. In discussing FIG. 3, the same network environment 100 is considered, where the UE 101 is connected with the network entity 103 before a handover event. Further, as an example scenario, as shown in FIG. 3, the UE 101 has to send data packets 1-40 to the network entity 103. Without loss of generality, there is one-to-one mapping for each data packet at a Packet Data Convergence Protocol (PDCP) layer 304 and an RLC layer 306 of the UE 101. The data packets 1-40 are received at the PDCP layer 304 of the UE 101. The data packets 1-40 (313) are received at the PDCP layer 304 at the UE 101 for UDC compression. After the UDC compression, the compressed PDCP data packets 1-40 are sent to an RLC layer 312 of the network entity 103. The compressed PDCP data packets 1-40 are UDC decompressed at a PDCP layer 310 of the network entity103. Now, consider a scenario where a PDCP compressed data packets 1-20 (314) were transmitted to the RLC layer 312. While transmitting, a PDCP compressed data packet 15 was dropped due to some interference over the air interface and is not received at the RLC layer 312 of the network entity103. Because data compression and decompression are a sequential process, the RLC layer 312 of the network entity 103 sends compressed PDCP data packets 1-14 (316) to the PDCP layer 310 of the network entity 103 for the UDC decompression and retains PDCP data packets 16-20. Thereafter, the RLC layer 312 sends an RLC status report to the RLC layer 306 of the UE 101 with ACK 21 and NACK 15. ACK 21 indicates acknowledgment of receiving data packets up to data packet 20 successfully, whereas NACK 15 indicates no acknowledgment of receiving data packet 15. As discussed herein, "ACK" may be a message acknowledging receipt of a particular data packet or set of data packets, and "NACK" may be a message indicating non-receipt of a particular data packet or set of data packets. Thereafter, the RLC layer 306 of the UE 101 processes the RLC status report and frees some memory in the UE 101 for storing the data packets up to 20, excluding the data packet 15. Meanwhile, the RLC layer 312 of the network entity 103 also receives PDCP compressed data packets 21-40. Since the PDCP compressed data packet 15 is missed and the PDCP compressed data packets 16-20 are buffered at the RLC layer 312 of the network enity103, the PDCP data packets 21-40 are retained for the buffer stage at the RLC layer 312 of the network enity103.

As per the 3GPPP standard, out-of-order data packets at the RLC layer are passed on to the PDCP layer of the network entity 103 at the time of the handover event or, e.g., during a re-establishment event. Thus, the RLC 306 of the UE 101 passes the data packet 15 and the data packets 21-40 back to the PDCP layer 304 of the UE 101 for retransmission following the handover event. Similarly, the PDCP layer 310 of the network entity 103 maintains the out-of-order data packets 16-40 to ensure in-order delivery of the data packets 16-40 after successful handover event completion. Post handover event, a PDCP status report is shared with the UE 101 by the network entity 103 if the status report required is set to "true" as per the 3GPP standard. The PDCP status report includes information of the acknowledged and the unacknowledged data packets. In other words, the information refers to the data packets which are received and the data packets that are missing. So, here in the present example, the PDCP layer 310 of the network entity 103 sends the PDCP status report ACK 41 and NACK 15 to the PDCP layer 304 of the UE 101. This indicates that PDCP compressed data packet 15 is missing, the PDCP layer 310 has acknowledged the compressed data packets up to 40 and is waiting for the next PDCP data packet 41 and the missing compressed data packet 15.

However, various problems may arise with the above-discussed prior art techniques, such as: (i) unnecessary storage of out-of-order PDCP compressed data packets; (ii) ambiguity as to whether the PDCP compression buffer should be updated before discarding duplicate PDCP packets; (iii) ambiguity as to whether the UE should wait for the transmission of compressed PDCP data packets; and (iv) transmission control protocol (TCP) throughput degradation / UDC checksum failure problems.

### SUMMARY

Disclosed herein is a system and a method that may increase a UDC data rate in a wireless communication network.

In an embodiment, the present subject matter relates to a method for UDC based communication in a wireless communication system. The method includes detecting a handover event or a re-establishment event for a UDC bearer, between a UE and a network, and after the detection of the handover event or the re-establishment event, performing a first determining operation for determining whether a PDCP status report is received by the UE from the network. The method further includes transmitting uncompressed data packets to the network until the PDCP status report is received. The method further includes performing a second determining operation for determining whether a PDCP timer associated with a reordering window of the PDCP layer of the network is running or stopped. Thereafter, the method includes transmitting compressed data packets to the network based on a result of the first or second determination operation.

In another embodiment, a method for use in a UDC based communication system and that may improve UDC data rate in a wireless communication system is disclosed herein. The method includes receiving, at a PDCP layer of a network, uncompressed data packets and compressed data packets from a UE. The method further includes discerning, at the PDCP layer of the network during a handover event or a re-establishment event for a UDC bearer, out-of-order compressed data packets and the uncompressed data packets among the received uncompressed data packets and compressed data packets. The method further includes storing the uncompressed data packets and discarding the out-of-order compressed data packets. Thereafter, the method includes generating a PDCP status report that includes a NACK message and an ACK message, wherein the NACK message corresponds to the discarded out-of-order compressed data packets and the ACK message corresponds to the uncompressed data packets. Thereafter, the method includes transmitting the generated PDCP status report to the UE.

In a further embodiment, a transmitter for use in a UDC based communication system and that may improve UDC data rate in a wireless communication network is disclosed herein. The transmitter includes one or more processors that are configured to perform the above-summarized method for UDC based communication.

In yet another embodiment, a transceiver apparatus for improving UDC data rate in a wireless communication network is disclosed herein. The transceiver apparatus includes one or more processors that are configured to perform the above-summarized method for improving UDC data rate in a wireless communication system.

In still another embodiment, a method for UDC based communication in a wireless communication system includes: detecting a handover event or a re-establishment event for a communication between a UE and a network; transmitting, from the UE to the network, uncompressed data packets and refraining from transmitting compressed data packets throughout a time period beginning at the detection of the handover or re-establishment event to a time at which the UE receives a PDCP status report from the network. After the PDCP status report is received, the UE determines whether a PDCP timer associated with a reordering window of a PDCP layer of the network is running or stopped. If the PDCP timer is running, the UE continues to transmit the uncompressed data packets to the network and refrains from transmitting the compressed data packets to the network. If the PDCP timer is stopped, the UE resumes transmission of the compressed data packets to the network.

At least some of the above and other features of the invention are set out in the claims.

### BRIEF DESCRIPTION OF THE DRAWINGS

These and other features, aspects, and advantages of the present inventive concepts will be better understood when the following detailed description is read with reference to the accompanying drawings in which like characters represent like parts throughout the drawings, wherein:
FIG. 1 illustrates an example network environment in which the user equipment (UE) is connected to the LTE Network, according to prior art;
FIG. 2 illustrates a prior art example showing an uplink data compression of data packets in a network environment;
FIG. 3 illustrates another example prior art network environment in which the UE is connected to the LTE network;
FIG. 4 is a signal flow diagram illustrating a method for UDC based communication between a UE and a receiver network in a wireless communication system, and for improving UDC data rate, according to an embodiment of the present disclosure;
FIG. 5 illustrates an example block diagram of the UE of the wireless communication system, according to an embodiment of the present disclosure;
FIG. 6 is a signal flow diagram illustrating a UDC based communication method between the receiver network and the UE in the wireless communication system, and for improving the UDC data rate, according to an embodiment of the present disclosure;
FIG. 7 illustrates an example block diagram of a network entity in the wireless communication system, according to an embodiment of the present disclosure;
FIG. 8 illustrates a flow diagram of a UDC based communication method for improving the UDC data rate in the wireless communication network, according to an embodiment of the present disclosure; and
FIG. 9 illustrates a flow diagram of a UDC based communication method for improving the UDC data rate in the wireless communication network, according to another embodiment of the present disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the inventive concepts. Furthermore, in terms of the construction of the device, one or more components of the device may have been represented in the drawings by conventional symbols, and the drawings may show only those specific details that are pertinent to understanding the embodiments of the inventive concepts so as not to obscure the drawings with details that will be readily apparent to those of ordinary skill in the art having the benefit of the description herein.

### DETAILED DESCRIPTION

It should be understood at the outset that although illustrative implementations of the embodiments of the present disclosure are illustrated below, the inventive concepts may be implemented using any number of techniques, whether currently known or in existence. The present disclosure should in no way be limited to the illustrative implementations, drawings, and techniques illustrated below, including the example design and implementation illustrated and described herein, but may be modified within the scope of the appended claims along with their full scope of equivalents.

Herein, the "/" symbol between two subjects means "and" or "or" ("and/or"), unless the context indicates otherwise. The term "some" as used herein is defined as "none, or one, or more than one, or all." Accordingly, the terms "none," "one," "more than one," "more than one, but not all" or "all" would all fall under the definition of "some." The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments."

The terminology and structure employed herein are for describing, teaching, and illuminating some embodiments and their specific features and elements and do not limit, restrict, or reduce the scope of the claims or their equivalents.

More specifically, any terms used herein such as but not limited to "includes", "comprises", "has", "have", and the like do not specify an exact limitation or restriction and certainly do not exclude the possible addition of one or more features or elements unless otherwise stated, and must not be taken to exclude the possible removal of one or more of the listed features and elements, unless otherwise stated with the limiting language "must comprise" or "needs to include."

Whether or not a certain feature or element was limited to being used only once, either way, it may still be referred to as "one or more features", "one or more elements", "at least one feature", or "at least one element". Furthermore, the use of the terms "one or more" or "at least one" feature or element does not preclude there being none of that feature or element unless otherwise specified by limiting language such as "there needs to be one or more ... " or "one or more element is required."

Unless otherwise defined, all terms, and especially any technical and/or scientific terms, used herein may be taken to have the same meaning as commonly understood by one having ordinary skill in the art.

Embodiments of the present inventive concepts will be described below in detail with reference to the accompanying drawings.

In the prior art discussed above in reference to FIGS. 1-3, a number of problems may arise and certain ambiguities may be apparent. For instance, in prior art systems of FIGS. 1-3 and considering the example presented earlier in connection therewith, during the handover event or a re-establishment event associated with the PDCP compression buffer 207, the RLC layer 312 of the network entity 103 dumps the out-of-order PDCP compressed data packets to the PDCP layer 310 of the network entity 103, and the PDCP layer 310 stores the out-of-order PDCP compressed data packets. For example, the PDCP compressed data packets 16-40, i.e., now out-of-order, are dumped to the PDCP layer 310. The out-of-order PDCP compressed data packets 16-40 are stored on the PDCP layer 310 that cannot be decompressed. This is because the compression buffers are not in sync since there are some missing packets before the handover event/re-establishment event and the compression buffer is reset following the handover event/re-establishment event. Hence, a problem (associated with the current 3GPP standard) in the above-explained network environment 100 is that the RLC layer 312 has to dump all the out-of-order PDCP compressed data packets to the PDCP layer 310 that are never decompressed, and therefore there is unnecessary storing of the out-of-order PDCP compressed data packets.

A second problem in the above-discussed network environment of FIGS. 1-3 is that, prior to the handover event, the UE 101 is transmitting the PDCP data packets 1-20 to the network entity 103. The network entity 103 may receive the PDCP data packets up to the PDCP data packets 20. The network entity 103 has acknowledged only up to PDCP data packet 14 via the RLC status report because the PDCP compressed data packet 15 is missing. Thereafter, the network entity 103 triggers the handover event and resets the PDCP compression buffer. Thereafter, the UE 101 completes the handover event and does the UDC compression and ciphering of the unacknowledged PDCP data packets, and sends them to the network entity 103. At the network entity 103, new compressed PDCP data packets 16-40 are available. Because prior to the handover event, the compressed PDCP data packets 16-40 are already present, therefore, the new compressed PDCP data packets act as duplicate PDCP data packets. Therefore, a problem arises in the case of the reception of the duplicate PDCP data packets. In the case of the duplicate PDCP data packets received on the network entity 103 after the handover event/re-establishment event, it is unclear whether the network entity 103 should update the PDCP compression buffer before discarding the duplicate PDCP data packets or should discard it without updating the PDCP compression buffer.

A third problem may be whether the UE 101 should wait for the transmission of the compressed PDCP data packets until the PDCP status report is received, since on the reception of the data packet 15, the network entity 103 may undergo decompression of all of the buffered data packets and could cause a UDC checksum failure.

A fourth problem may be as follows: the PDCP status report contains a mixture of the ACKs and NACKs and ends up in the handover/ re-establishment event. This situation has further two sub-problems:
(a) TCP throughput performance degrade: The UE 101 frees the ACKed PDCP data packets, whereas the network entity 103 is unable to use these packets (ACKed PDCP data packets) since they are out-of-order and it cannot decompress them successfully. Consequently, these ACKed PDCP data packets can only be recovered by TCP retransmission. Since the UE 101 had freed the ACKed PDCP data packets, the network entity 103 may be unable to decompress the ACKed PDCP data packets successfully.
(b) UDC checksum failure problem: This problem occurs when the out-of-order data packets are decompressed using a different compression buffer prior to the handover event while the missing data packet 15 is compressed with a reset compression buffer following the handover event.

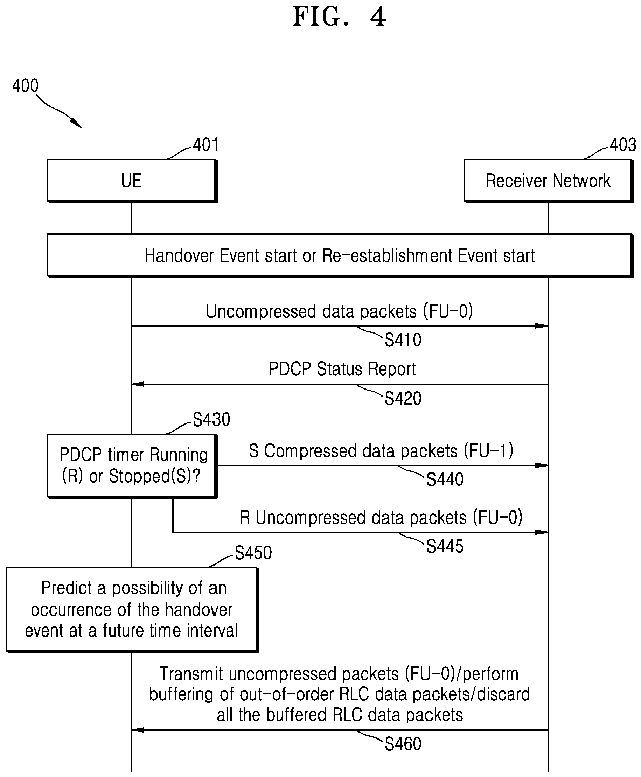

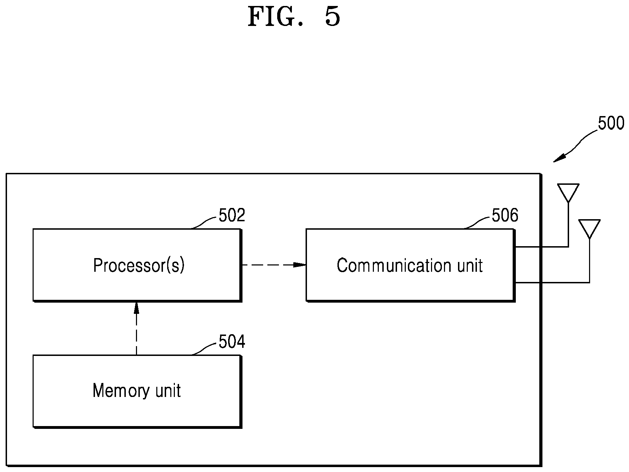

FIG. 4 illustrates a signal flow diagram illustrating a communication method between a UE and a receiver network in a wireless communication system for improving UDC data rate, according to an embodiment of the present disclosure. FIG. 5 illustrates an example block diagram of the UE of the wireless communication system, according to an embodiment of the present disclosure. For the sake of brevity, the description of FIGS. 4 and 5 will be explained in conjunction with each other.

Referring first to FIG. 5, hereinafter, it is to be noted that terms including "unit" or "module" may refer to a unit for processing at least one function or operation and may be implemented with hardware, software, or a combination of hardware and software. In one or more embodiments of the disclosure, the UE 500 may refer to a transmitter for improving the UDC data rate in the wireless communication network.

In FIG. 5, the UE 500 may include one or more processors 502, a communication unit 506 (e.g., communicator or communication interface), and a memory unit 504 (e.g., storage). By way of a non-limiting example, the UE 500 may be a user equipment, such as a cellular phone or another device that communicates over a plurality of cellular networks (such as a 3G, 4G, a 5G, or pre-5G, 6G network or any future wireless communication network). The communication unit 506 may perform functions for transmitting and receiving signals via a wireless channel. In an embodiment, the one or more processors 502 may perform the method as described in FIG. 4.

The one or more processors 502 may be a single processing unit or a plurality of processing units, all of which could include multiple computing units. The one or more processors 502 may be implemented as one or more microprocessors, microcomputers, microcontrollers, digital signal processors, central processing units, state machines, logic circuitries, and/or any devices that manipulate signals based on operational instructions. Among other capabilities, the one or more processors 502 are configured to fetch and execute computer-readable instructions and data stored in the memory. One or more processors 502 may include one or a plurality of processors. One or more of the one or a plurality of processors 502 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 502 may control the processing of the input data in accordance with a predefined operating rule or artificial intelligence (AI) model stored in the non-volatile memory and the volatile memory, i.e., memory unit 504. The predefined operating rule or artificial intelligence model may be provided through training or learning.

The memory unit 504 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

Referring now to FIG. 4, a network environment 400 may be similar to the network environment of FIG. 3. In FIG. 4, the one or more processors 502 may detect the occurrence of a handover event or a re-establishment event for the UDC bearer, between the UE 401 and the network entity 403. Note that herein, the terms "receiver network", "network", "communication network" and "network entity" may be used interchangeably.

Now, the following discussion will consider the same example of FIG. 3 as a non-limiting example to facilitate understanding of the present inventive concept, where the UE 101 has sent the data packets 1-40 to the network entity 103 before the handover event for decompression, but the data packet 15 was not successfully recovered. Thereafter, following the handover event, the UE 101 maintained the PDCP data packets 15 and 21-40 for the retransmission before receiving the status report.

Now, to facilitate understanding, an example will be discussed for the embodiment of FIG. 4, with the same scenario as FIG. 3, after the detection of the occurrence of the handover event or the re-establishment event for the UDC bearer between the UE 401 and the network entity 403.In FIG. 4, at operation S410, the UE 401 prior to receiving the PDCP status report transmits the PDCP data packets 15 and 21-40 as uncompressed data packets ("FU-0") to the network entity 403, where they are routed to a PDCP layer (through an RLC layer) of the network entity 403. In this regard, the uncompressed data packets (FU-0) are transmitted to the network entity 403 at this time because the UE 401 is unaware of whether or not the network entity 403 is buffering old data packets (that were sent before the handover event). This transmission of uncompressed data packets (FU-0) to the network entity 403 may continue until the UE 401 receives the PDCP status report transmitted from the network entity 403 (at S420). The PDCP status report includes information of acknowledged and unacknowledged data packets. Once the PDCP status report is received and processed by the UE 401, the UE 401 has information on whether the network entity 403 is still buffering the old compressed data packets or has discarded them. It is noted here that an "FU" bit in a UDC packet header such as H1, H2 or H3 of FIG. 2 having a value "0" ("FU-0") indicates that the data packet is uncompressed, and an FU bit with value "1" ("FU-1") indicates that the data packet is compressed.

The following two cases based on the received PDCP status report will now be discussed in describing aspects of an example embodiment of the present disclosure. In the first case, the PDCP status report shared by the network entity 403 has "First Missing Sequence" (FMS) number as 41 and Bitmap fields have value NACK for the PDCP data packet 15 (which was missing while the PDCP data packets 1-40 are transmitted). The FMS and the NACK indicate that the network entity 403 is still maintaining the old data packets, and this could lead to the situation in which duplicate PDCP data packets are transmitted, since the UE 401 is still retransmitting un-acknowledged data packets that were transmitted prior to the handover event/re-establishment event. Thus, the UE 401 should continue transmitting the uncompressed data packets up until the PDCP data packet no. 40. Also, the PDCP data packets 15, 21....40 may be considered as the PDCP reordering window.

In the second case, the PDCP status report shared by the network entity 403 has FMS as 15 and optional Bitmap fields with value NACK for PDCP data packets 16 to 40. That indicates that network entity 403 has not buffered the old compressed data packets. Thus, based on this PDCP status report, at operation S430, the UE 401 may stop a PDCP timer and switch to transmitting compressed data packets (FU-1) to the network entity 403 (S440). Here, the UE 401 was transmitting the uncompressed data packets (FU-0) following the handover event but prior to the PDCP status report reception. On the other hand, if the timer is still running, (outcome "R" at S430), at operation S445, the UE 401 continues to transmit only uncompressed data packets. Thereafter, at operation S450, the UE 401 estimates a probability (interchangeably, "predicts a probability" or "predicts a possibility") of a future handover/ re-establishment event (hereafter, the "future event"), which may be the probability of the future handover / re-establishment event occurring within a certain time (between the current time and a certain future time). This estimation may be based on measurement reports, which may include information on a neighbouring cell(s) having signal quality measured to be currently superior to that of a current serving cell. Accordingly, when the probability of the future event is estimated to be high (e.g., higher than or equal to a predetermined threshold), and the UE had resumed transmitting compressed data packets at S440, then at S460, the UE 401 falls back to transmitting the uncompressed data packets (FU-0). In an embodiment, the UE 401 may transmit radio link control (RLC) data packets for the UDC bearer to the network entity 403, and if the probability of the future event is estimated to be high (e.g., greater than or equal to the predetermined threshold), at S460, out-of-order transmitted RLC data packets that are acknowledged by the network entity 403 are buffered, for the UDC bearer for a specific time period. In another embodiment, if the probability of the future event is estimated to be low (e.g. lower than the predetermined threshold), at S460, all the buffered RLC data packets are discarded.

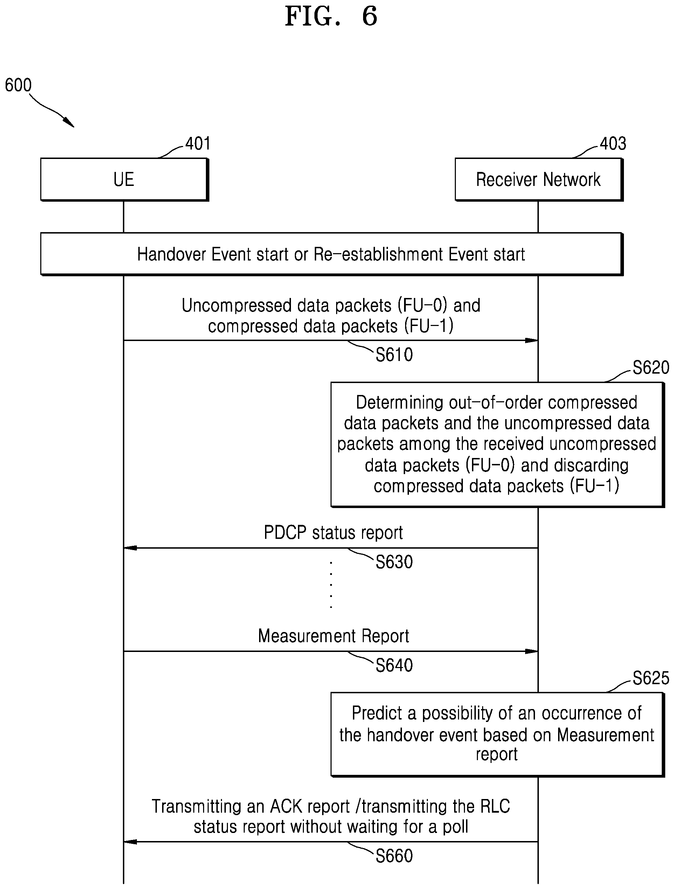

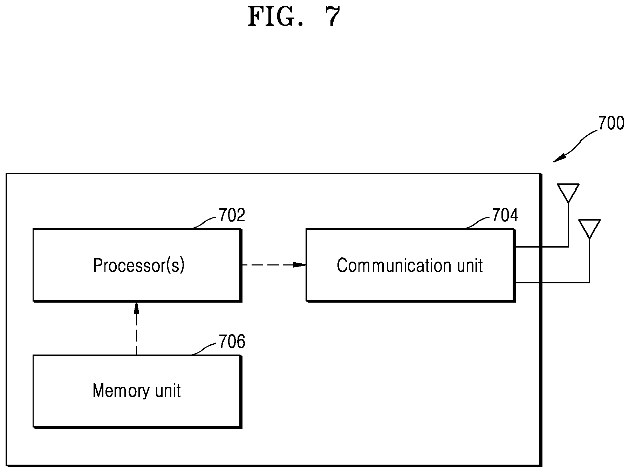

FIG. 6 is a signal flow diagram illustrating a UDC based communication method between the receiver network and the UE in the wireless communication system for improving the UDC data rate, according to an embodiment of the present disclosure. FIG. 7 illustrates an example block diagram of a network entity of the wireless communication system, according to an embodiment of the present disclosure. For the sake of brevity, the description of FIGS. 6 and 7 will be explained in conjunction with each other.

Referring to FIG. 7, the network entity 700 may correspond to a 3GPP Public Land Mobile Network (PLMN)-A and/or N3GPP PLMN-A, as discussed throughout this disclosure. The network entity 700 may include one or more processors 702, a memory unit 706 (e.g., storage), and a communication unit 704 (e.g., communicator or communication interface). Further, the network entity 700 may also include a Cloud-Radio Access Network (RAN) (C-RAN), a Central Unit (CU), a core Network (NW), a Distributed unit (DU), or any other possible network (NW) entity. The communication unit 704 may perform one or more functions for transmitting and receiving signals via a wireless channel. In an embodiment, the network entity 700 as disclosed in FIG. 7 may refer to a transceiver apparatus for improving the UDC data rate in a wireless communication network. Also, the network entity 700 may refer to a receiver network throughout the description and drawings. Further, in an embodiment, the one or more processors 702 may perform the method as described in FIG. 6.

As an example, one or more processors 702 may be a single processing unit or a number of processing units, all of which could include multiple computing units. One or more processors 702 may be implemented as one or more microprocessors, microcomputers, microcontrollers, digital signal processors, central processing units, state machines, logic circuitries, and/or any devices that manipulate signals based on operational instructions. Among other capabilities, one or more processors 702 are configured to fetch and execute computer-readable instructions and data stored in the memory. One or more processors 702 may include one or a plurality of processors. At this time, at least one of the one or a plurality of processors 702 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or more processors 702 may control the processing of the input data in accordance with a predefined operating rule or artificial intelligence (AI) model stored in the non-volatile memory and the volatile memory, i.e., memory unit 706. The predefined operating rule or artificial intelligence model may be provided through training or learning.

The memory 704 may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

Some example embodiments disclosed herein may be implemented using processing circuitry. For example, some example embodiments disclosed herein may be implemented using at least one software program running on at least one hardware device and performing network management functions to control the elements.

Referring to FIG. 6, considering a network environment 600 similar to the network environment of FIG. 3, at operation S610, the receiver network 403 receives the uncompressed data packets (FU-0) and compressed data packets (FU-1) from the UE 401. Note, however, that in the example of FIG. 3 (prior art) was explained in the context of the network entity 103 receiving all compressed data packets, i.e., PDCP data packets 1-40.

At operation S620, the receiver network 403 may discern out-of-order compressed data packets and the uncompressed data packets from the received uncompressed data packets (FU-0) and compressed d data packets (FU-1). In other words, the receiver network 403 should discard the PDCP data packets 16 onwards till 40 (out-of-order data packets) as all are compressed packets and there is no point in buffering the out-of-order data packets. Thereafter, at operation S630, the PDCP layer of the receiver network 403 may generate and transmit the PDCP status report. The PDCP status report includes a NACK message and an ACK message. The NACK message corresponds to the discarded out-of-order compressed data packets and the ACK message corresponds to the uncompressed data packets. In other words, the PDCP layer of the receiver network 403 may generate the PDCP status report which has FMS as 15 and Optional Bitmap fields with value NACK for PDCP data packets 16 to 40. As an example, the PDCP layer of the receiver network 403 may choose to either inform the UE 401 about the PDCP data packets 16 to 40 as NACK or only set the FMS to 15. This way, a potential problem will be avoided with reordering attempts with newly received PDCP data packets 15, 21 to 40 from the UE 401 following the handover event/re-establishment event, and ambiguity regarding old buffered PDCP data packets 16-40 at the receiver network 403. Thus, UDC checksum failures due to the PDCP level processing of the data packets will be avoided following the handover event/re-establishment event.

Further, since the out-of-order compressed data packets are discerned and discarded, therefore the UDC checksum error can be avoided during the compression and results in an improvement of the UDC data rate.

At operation S640, the UE may send a Measurement report to the network 403. Thereafter, at operation S650, the receiver network 403 may estimate the probability of the handover event based on the Measurement report(s). At operation S660, the receiver network 403 may transmit, to the UE 401, an ACK report/transmit the RLC status report without waiting for a poll. For example, at around the time when the receiver network 403 receives the Measurement report from the UE 401, the receiver network 403 may take actions, at operation S660, like (action A) e.g., transmitting an RLC status report quickly prior to the occurrence of the handover event for all RLC data packets 1 to 40 quickly, after it transmits the RLC status report for ACK 21, NACK 15, or (action B) e.g., only transmitting the RLC status report up to ACK 15. Both these actions (action A) and (action B) could be used based on the handover decision which is being taken by the receiver network 403. For example, the receiver network 403 may use the action B if the handover is imminent or may use the action A if the handover is not imminent. This way, action B can discard the RLC data packets 16-20 (as in FIG. 3 prior art) which could be recovered only via TCP recovery since in general RLC of the UE 401 would free them as per the standard which can be avoided using operations disclosed in FIG. 6.

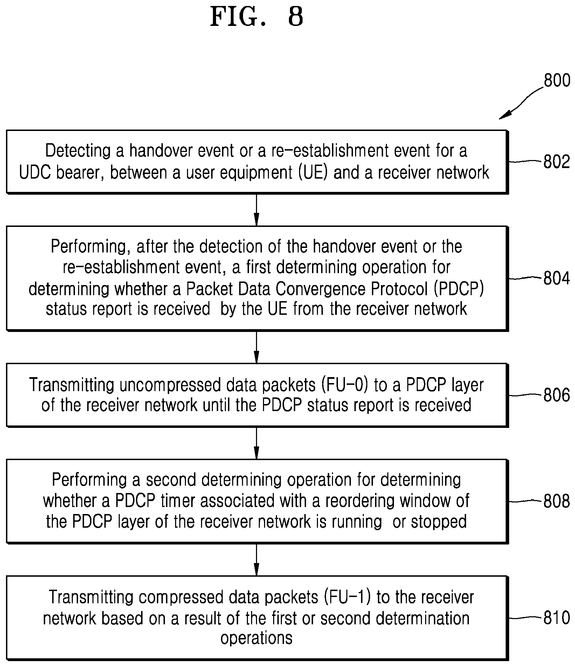

FIG. 8 illustrates a flow diagram of a UDC based communication method, for improving the UDC data rate, in a wireless communication system, according to an embodiment of the present disclosure. According to an embodiment, FIG. 8 depicts a method 800 to be implemented in the UE transmitter. The detailed explanation and implementation are being explained through FIGS. 4-7, thus for the sake of brevity, the same is being omitted here.

At operation 802, the method 800 comprises detecting the handover event or the re-establishment event for the UDC bearer, between the UE 401 and the network entity 403. Thereafter, at operation 804, the method 800 includes performing the first determining operation for determining whether the PDCP status report is received by the UE 401 from the receiver network entity 403 after the detection of the handover event or the re-establishment event. In an embodiment, the PDCP status report may indicate the UE 401 regarding the Protocol Data Units (PDUs) that are received, and the PDUs that are missed at the network entity 403. In other words, one or more PDUs are received and lost at the receiver network, and this is conveyed to the UE 401 by the network by transmitting the PDCP status report. This way, the UE 401 can avoid unnecessary transmission of duplicate PDU data packets.

Accordingly, the one or more processors 502 may determine if the PDCP status report is received at the UE 401.

Thereafter, at operation 806, the method 800 comprises transmitting the uncompressed data packets (FU-0) to the PDCP layer of the receiver network until the PDCP status report is received. Hence, if at operation 804, it is determined that the PDCP status report is not received, then the one or more processors 502 may transmit the uncompressed data packets (FU-0) to the PDCP layer of the receiver network until the PDCP status report is received by the UE. However, if at operation 804, it is determined that the PDCP status report is received by the UE 401, then the one or more processors 502 may transmit the compressed data packets (FU-1) to the receiver network entity 403.

Then, at operation 808, the method 800 comprises performing the second determining operation for determining whether a PDCP timer associated with the reordering window of the PDCP layer of the receiver network entity 803 is running or stopped. If it is determined that the PDCP timer is stopped, then at operation 810, the method 800 comprises transmitting the compressed data packets (FU-1) to the receiver network. Here, the reordering window is indicative of the out-of-order data packets that are held buffered at the PDCP layer due to the re-establishment event. The buffered packets may contain small size or big size packets. Considering the same, the timer value of the PDCP timer could be small or big to ensure more uncompressed data packets (FU-0) are transmitted post handover event to avoid compression-decompression buffer sync failure. Given that the standard has been ambiguous in handling the duplicate compressed data packets at the PDCP layer post handover event and has been highlighted in one of the above problems.

Further, in an embodiment of a method performed by the one or more processors 502, the method may predict the probability of a future handover event. In an embodiment, the prediction is based on the UE measurement reports, which are transmitted by the UE to the receiver network. In another embodiment, the estimated probability is high if the UE detects that the network signal is weak or a block error rate (BLER) at the network entity is greater than a predetermined signal threshold. It should be noted that the predetermined signal threshold may be set and defined by the UE 401 in advance. If the predicted probability of the future handover event is higher than or equal (e.g. greater than or equal to) to a predetermined prediction threshold, then the one or more processors 502 may transmit the uncompressed packets (FU-0) to the PDCP layer and concurrently cease the generation and transmission of the compressed packets (FU-1) to the PDCP layer of the receiver network entity 403. A time at which the future handover event is estimated to occur, may be based on an average time which is learned from multiple previous handover events, and/or post-triggering measurement reports having the better neighbour measurement cell. Initially, it could be assigned with a certain non-zero value.

The receiver network entity 403 may correspond to a receiver that may only decompress data packets if they are received in order. Thus, in this example, out-of-order compressed data packets at the receiver network cannot be decompressed, and storing them in the memory unit 706 for in-order delivery to a higher layer after the handover/ re-establishment event is counterproductive. Hence, in one or more embodiments disclosed herein, the probability of the handover event is estimated to be higher than or equal to the predetermined prediction threshold, i.e., high, the one or more processors 502 may then transmit radio link control (RLC) data packets for the UDC bearer to the receiver network and may perform for the UDC bearer, buffering of out-of-order transmitted RLC data packets that are acknowledged by the receiver network. In an embodiment, the buffering may be performed for a specific time period. Then, the one or more processors 502 may discard, from the buffered RLC data packets, all in-order packets which are acknowledged by a subsequent RLC status report. In another embodiment, the one or more processors 502 may discard, from the buffered RLC data packets, all in-order packets after the expiration of the specific time period. However, if the probability of the handover event is lower than the predetermined prediction threshold, i.e., low, then the one or more processors may continue with the RLC behaviour as defined for the RLC status report handling where the RLC of the transmitter UE frees the packet at receiving acknowledgment from the RLC of the receiver network. It should be noted that the predetermined prediction threshold and the specific time period may be set and predefined by the UE 401 in advance. The specific time period may be small and may be similar to the future timer intervals.

In an embodiment, the one or more processors 502 may switch to a compressed data packet transmission mode from an uncompressed data packet transmission mode based on the result of the first or second determination operation. Further, the timer value of the PDCP timer may be in a range of zero to several milliseconds (where "several" may be in the range of two to nine). The PDCP timer may be stopped when the PDCP data packets that are transmitted prior to the handover event or the re-establishment event are further transmitted to the receiver network after the completion of the handover event or the re-establishment event.

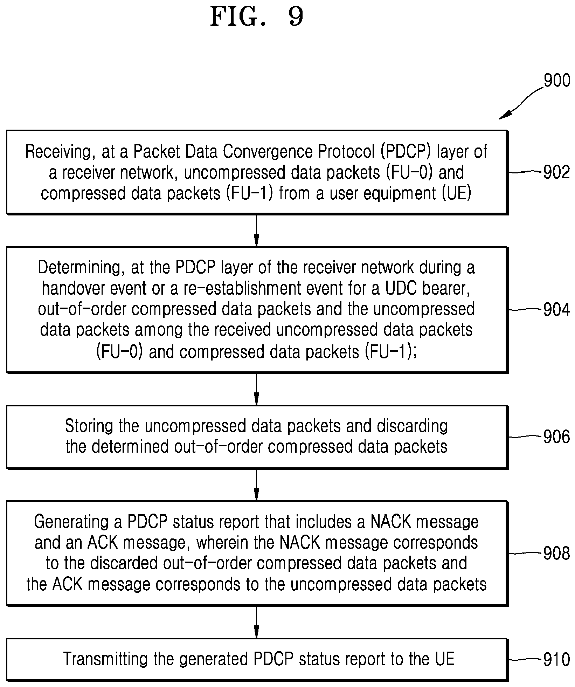

FIG. 9 illustrates a flow diagram of a UDC based communication method that may improve the UDC data rate in the wireless communication network, according to an embodiment of the present disclosure. According to an embodiment, FIG. 9 depicts a method 900 to be implemented in the transceiver apparatus of a network entity. The detailed explanation and implementation are being explained through FIGS. 4-7, thus for the sake of brevity, the same is being omitted here.

In operation 902, the method 900 receives, at the PDCP layer of the receiver network 700, the uncompressed data packets (FU-0) and the compressed data packets (FU-1) from the UE 401. As an example, a network environment 900 similar to the network environment of FIG. 4 is considered in the following discussion. Accordingly, the one or more processors 702 may receive the uncompressed data packets (FU-0) and the compressed data packets (FU-1) from the UE 401 at the PDCP layer of the receiver network entity 403.

In operation 904, the method 900 discerns (e.g. determines), at the PDCP layer of the receiver network, during the handover event or the re-establishment event for the UDC bearer, the out-of-order compressed data packets and the uncompressed data packets among the received uncompressed data packets (FU-0) and compressed data packets (FU-1).

In operation 906, the method 900 stores the uncompressed data packets in the memory unit 706 and discards the discerned (e.g. determined) out-of-order compressed data packets.

Thereafter, in operation 908, the method 900 generates the PDCP status report, where the PDCP status report includes a negative acknowledgment (NACK) message corresponding to the discarded out-of-order compressed data packets and an acknowledgment (ACK) message corresponding to the uncompressed data packets. In an embodiment, the PDCP status report may convey to the UE which PDUs are received, and which are missed at the network entity 403. Then, the one or more processors may transmit the generated PDCP status report to the UE 401.

In a further embodiment, the one or more processors 702 may discard the duplicate compressed data packets before updating the compression buffer.

In still another embodiment of a method performed by the one or more processors 702, the measurement reports are received from the UE 403. Then, the method predicts the possibility of the future handover event based on the received measurement reports. If the possibility of the occurrence of the handover event is higher than or equal to (e.g. greater than or equal to) the predetermined prediction threshold, i.e., high, the one or more processors 702 may refrain from transmitting the RLC status report to the UE and transmit an ACK report for all in-order received PDUs. In an embodiment, the RLC status report may include ACK/NACK report. In another embodiment, the probability of the handover event is higher than or equal (e.g. greater than or equal to) to the predetermined prediction threshold, i.e., high, based on the measurement report, then the one or more processors 702 may trigger a polling transmission operation quickly (e.g. my speed up the triggering of a polling transmission operation) by reducing a poll-related associated variable, wherein the poll-related associated variable corresponds to at least one of a POLL_BYTE or POLL_PACKET. That is, the time to the next polling transmission operation is reduced (e.g. triggered more quickly) by reducing the poll-related associated variable. POLL_BYTE may represent a number of bytes before the next poll (e.g. a poll may be triggered every POLL_BYTE bytes). For instance, POLL_BYTE may be equivalent to the pollByte parameter defined in 3GPP specification 36.322 7.4. POLL_PACKET may represent a number of packets before the next poll (e.g. a poll may be triggered every POLL_PACKET packets). For instance, POLL_PACKET may be equivalent to the pollPDU parameter defined in 3GPP specification 38.322 7.4. A polling transmission operation may trigger an RLC status report. However, if the possibility of the handover event is lower than the predetermined prediction threshold, i.e., low, based on the measurement report(s), then the one or more processors 702 may transmit the RLC status report to the UE 401 without waiting for a poll if the out-of-order compressed data packets are buffered at the RLC layer. This is to avoid packets that getting dropped in the event of handover, as the UDC decompression operation works if no data packets are missing. In another embodiment, the probability of the handover event is lower than the predetermined prediction threshold, then the method may trigger the polling operation at a specific time interval that is configured by the receiver network entity 403.

Embodiments of the inventive concept such as those disclosed above may exhibit technical advantages including an improvement in data throughput by avoiding the UDC Checksum error. The technical advantages may further include higher CPU (software/hardware) Million instructions per second (MIPS) by completely or substantially avoiding the UDC checksum error as described above and skipping unwanted re-compression/re-ciphering method operations.

While specific language has been used to describe the disclosure, any limitations arising on account of the same are not intended. As would be apparent to a person in the art, various working modifications may be made to the method to implement the inventive concept as taught herein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

## Claims

1. A method for Uplink Data Compression, UDC, based communication in a wireless communication system, the method comprising:
detecting a handover event or a re-establishment event for a UDC bearer, between a user equipment, UE, and a network, and, after the detection of the handover event or the re-establishment event, performing a first determining operation for determining whether a Packet Data Convergence Protocol, PDCP status report is received by the UE from the network;
transmitting uncompressed data packets to the network until the PDCP status report is received;
performing a second determining operation for determining whether a PDCP timer associated with a reordering window of a PDCP layer of the network is running or stopped; and
transmitting compressed data packets to the network based on a result of the first or second determination operation.

2. The method of claim 1, further comprising:
estimating a probability of a future handover event based on at least one UE measurement report, wherein the at least one UE measurement report is transmitted from the UE to the network; and
transmitting the uncompressed data packets to the network and ceasing transmission of the compressed data packets to the network, based on the estimated probability of the future handover event.

3. The method of claim 1 or claim 2, further comprising:
transmitting radio link control, RLC, data packets for a UDC bearer to the network;
if a predicted probability of a future handover event is higher than or equal to a threshold, buffering, for the UDC bearer for a specific time period, out-of-order transmitted RLC data packets that are acknowledged by the network; and
discarding, from the buffered RLC data packets, all in-order packets which are acknowledged by a subsequent RLC status report or after expiration of the specific time period.

4. The method of claim 3, further comprising:
discarding all the buffered RLC data packets if the predicted probability of the future handover event is lower than the threshold; and
retransmitting the buffered RLC data packets in order following completion of the handover event or the re-establishment event.

5. The method of any preceding claim, further comprising:
switching to a compressed data packet transmission mode from an uncompressed data packet transmission mode based on the result of the first determination operation or the second determination operation, wherein in the uncompressed data packet transmission mode, no compressed packets are transmitted.

6. The method of any preceding claim, wherein
a timer value of the PDCP timer is in a range between zero to nine milliseconds, and the PDCP timer is stopped when PDCP data packets that are transmitted prior to the occurrence of the handover event or the re-establishment event are re-transmitted to the network after completion of the handover event or the re-establishment event.

7. A method for uplink data compression, UDC, based communication in a wireless communication system, the method comprising:
receiving, at a Packet Data Convergence Protocol, PDCP, layer of a network, uncompressed data packets and compressed data packets from a user equipment, UE;
discerning, at the PDCP layer of the network during a handover event or a re-establishment event for a UDC bearer, out-of-order compressed data packets and the uncompressed data packets among the received uncompressed data packets and compressed data packets;
storing the uncompressed data packets and discarding the out-of-order compressed data packets;
generating a PDCP status report that includes a NACK message and an ACK message, wherein the NACK message corresponds to the discarded out-of-order compressed data packets and the ACK message corresponds to the uncompressed data packets; and
transmitting the generated PDCP status report to the UE.

8. The method of claim 7, comprising:
discarding duplicate compressed data packets before an update of a compression buffer and the transmission of the PDCP status report to the UE.

9. The method of claim 7 or claim 8, comprising:
receiving at least one measurement report from the UE;
estimating a probability of the handover event based on the at least one received measurement report; and
discarding, a transmission of an RLC status report to the UE and transmitting an ACK report for all in-order received Protocol Data Units, PDUs, if the estimated probability of the handover event is higher than or equal to a threshold, wherein the RLC status report includes an ACK/NACK report.

10. The method as claimed in claim 9, comprising:
transmitting the RLC status report to the UE without waiting for a poll if the estimated probability of the handover event is lower than the threshold.

11. The method as claimed in claim 9 or claim 10, comprising:
triggering, if the estimated probability of the handover event is higher than or equal to the threshold, a polling transmission operation quickly by reducing a poll-related associated variable, wherein the poll-related associated variable corresponds to at least one of a POLL BYTE or POLL PACKET.

12. The method as claimed in claim 11, comprising:
triggering, if the estimated probability of the handover event is lower than the threshold, the polling operation at a specific time interval that is configured by the network.

13. A transmitter for use in uplink data compression, UDC, based communication in a wireless communication system, the transmitter comprising:
one or more processors configured to:
detect a handover event or a re-establishment event for a UDC bearer, between the transmitter and a network;
perform, after the detection of the handover event or the re-establishment event, a first determining operation for determining whether a Packet Data Convergence Protocol, PDCP, status report is received by the transmitter from the network;
transmit uncompressed data packets to the network until the PDCP status report is received;
perform a second determining operation for determining whether a PDCP timer associated with a reordering window of the PDCP layer of the network is running or stopped; and
transmit compressed data packets to the network based on a result of the first or second determination operation.

14. The transmitter of claim 13, wherein the transmitter is a component of a user equipment, UE.

15. The transmitter of claim 14, wherein the one or more processors is further configured to:
estimate a probability of a future handover event based on at least one UE measurement report, wherein the at least one UE measurement report is transmitted from the UE to the network; and
transmit the uncompressed data packets to the network and cease transmission of the compressed data packets to the network, when the estimated probability of the future handover event is higher than or equal to a threshold.
